# EUROPÄISCHE PATENTANMELDUNG

(11) **EP 2 206 688 A1**
(43) Veröffentlichungstag der Anmeldung: **14.07.2010**
(21) Anmeldenummer: 09015571.4
(22) Anmeldetag: 16.12.2009
(51) Int. Cl.: C02F 11/08, C02F 1/72, C02F 101/30, C02F 103/26

(54) **Thermo-chemische Aufbereitung des Processwassers einer hydrothermalen Karbonisierung**

(30) Priorität: 16.12.2008 DE 102008062126
(71) Anmelder: Suncoal Industries Gmbh, 15711 Königs Wusterhausen (DE)
(72) Erfinder: Wittmann, Tobias, 10691 Berlin (DE); Kleinert, Mike, 10555 Berlin (DE)
(74) Vertreter: Henrion, Oliver

(57) **Zusammenfassung**

Die vorliegende Erfindung betrifft die Aufbereitung des Prozesswassers einer hydrothermalen Karbonisierung von Biomasse, worin das von der Kohle abgetrennte Wasser vor einer indirekten Einleitung oder Zufuhr zu einer biologischen Aufbereitung thermo-chemisch aufbereitet wird.

## Beschreibung

Die vorliegende Erfindung betrifft ein Verfahren und eine Vorrichtung zur hydrothermalen Karbonisierung von nachwachsenden Rohstoffen und organischen Reststoffen mit einer thermo-chemischen Aufbereitung des Prozesswassers.

Nachwachsende Rohstoffe und organische Reststoffe, die in dem erfindungsgemäßen Verfahren eingesetzt werden können, werden im Weiteren mit dem Begriff Einsatzstoff bzw. Einsatzstoffe bezeichnet. Unter Einsatzstoff soll vorwiegend pflanzliche und tierische Biomasse sowie Stoffwechselprodukte verstanden werden, insbesondere nachwachsende Rohstoffe, wie Holz, Holzhackschnitzel, Grünschnitt aus der Landschaftspflege, Pflanzen, Stroh, Silage, und organische Reststoffe aus der Land- und Forstwirtschaft sowie der Nahrungsmittelindustrie und Entsorgungswirtschaft, sowie auch Torf, Rohbraunkohle, Papier- und Klärschlämme, Trester und dergleichen.

Die Einsatzstoffe werden durch hydrothermale Karbonisierung im Wesentlichen zu einem kohlenstoffreichen Feststoff, einer wässrigen Fraktion, die wasserlösliche organische und anorganische Verbindungen enthält, sowie einer Gasfraktion, vornehmlich bestehend aus Kohlendioxid, umgesetzt. Die wässrige Fraktion ist das Zielsubstrat für die nachgeschaltete erfindungsgemäße Behandlung.

Das Anwendungsgebiet der Erfindung ist die thermo-chemische Aufbereitung eines Prozesswassers einer hydrothermalen Karbonisierung der Einsatzstoffe, welches mit gelösten organischen und anorganischen Verbindungen verunreinigt ist, um einen besseren Abbau in einer nachgelagerten biologischen Aufbereitungsstufe zu gewährleisten und damit die Kosten für eine indirekte Einleitung als Abwasser zu reduzieren bzw. ein direkte Einleitung als Abwasser zu ermöglichen.

Beim Stand der Technik wird idR die Biomasse des natürlichen Kohlenstoffkreisprozesses verrottet oder umweltbelastend kompostiert und so weitgehend einer höherwertigen stofflichen und energetischen Nutzung entzogen. Industrielle Prozesse zur Umwandlung der Einsatzstoffe in Humus und Kohle durch hydrothermale Karbonisierung in der Massenproduktion sind nicht Stand der Technik, obwohl die wissenschaftlichen Grundlagen für die Umwandlung dieser Einsatzstoffe in Kohle 1913 von Bergius veröffentlicht wurden.

Vorhanden sind wissenschaftliche Grundlagen für die Umwandlung der Einsatzstoffe, wie Holz, Stroh, Gras, Grünschnitt, Landschaftspflegeholz, Schlempe, Gärreste, Maissilage, Ganzpflanzensilage und organischer Abfall, aber auch Torf und Rohbraunkohle durch Dehydratation (Abspaltung von Wasser) bei Temperaturen zwischen 180°C und 300°C in Anwesenheit von flüssigem Wasser in kohlenstoffreiche und gleichzeitig sauerstoffarme Feststoffe. Danach muss während der Reaktion der Druck mindestens dem Sattdampfdruck des Reaktionsgemisches bei der gewählten Reaktionstemperatur entsprechen oder darüber liegen. In Abhängigkeit der verwendeten Biomasse ist das Erreichen einer Mindesttemperatur erforderlich, um die Reaktion zu starten und deren Fortscheiten sicherzustellen. Diese beträgt etwa 180°C für zuckerreiche Biomasse und liegt bei bis zu 230°C für cellulose- und ligninreiche Biomasse. In der Regel sind, je nach den gewünschten Produkteigenschaften, Verweilzeiten zwischen 30 Minuten und über 10 Stunden erforderlich.

Eine hydrothermale Karbonisierung verläuft über mehrere Schritte unter der Bildung von Intermediaten. Im ersten Schritt werden im Wesentlichen amorphe Cellulose sowie Hemicellulose in die entsprechenden Monosaccharide gespalten. Im zweiten Schritt werden daraus Degradationsfolgeprodukte wie Huminsäuren, Hydroxymethylfurfural (HMF) und Furfural, die wiederum teilweise zu Kohle kondensieren.

Buana Girisuta (Levulinic Acid from Lignocellulosic Biomass, Doktorarbeit an der Universität Groningen, NL, 2007) untersuchte in seiner Dissertation die Herstellung von Lävulinsäure aus Biomasse in flüssigem Wasser und stellte dabei auch die Bildung von Kohle fest. Er beschrieb die Katalyse über verschiedene homogene (u.a. Bronstedsäuren) und heterogene Katalysatoren (u.a. Zeolithe) und ermittelte jeweils auch die Ausbeute an Kohle. R. E. Olsen (The Oxidation of Glucose in Aqueous Solution by Oxygen, Doktorarbeit an der Universität Appleton, Wisconsin, USA, 1967) untersuchte in seiner Dissertation die Oxidation von Glukose in flüssigem Wasser. Im Ergebnis wurde gefunden, dass das aus Glukose gebildete HMF sowohl durch eine Säurekatalyse als auch durch die Oxidation mit Sauerstoff verkohlt wurde.

Weiterhin wurde die Verkohlung von Huminsäuren bei Temperaturen zwischen 150°C und 300°C untersucht (Kreulen, D.J.W., Kreulen-von-Selms, F.G. 1957. Brennstoffchemie, 38-49). Es stellte sich heraus, dass die Verkohlungsprodukte die aus Huminsäuren gewonnen wurden, ähnliche Eigenschaften aufweisen, wie die Verkohlungsprodukte der Einsatzstoffe.

In großtechnischen Anwendungen von hydrothermalen Karbonisierungsprozessen wird aus Effizienz - insbesondere Kostengründen - eine Minimierung der Verweilzeit in der hydrothermalen Karbonisierung und ein schnelles Abkühlen der Produkte der hydrothermalen Karbonisierung angestrebt. Dadurch bedingt sind jedoch ein erheblicher Anteil an nicht abfiltriebaren Schwebestoffen im Prozesswasser sowie hohe CSB und TOC Werte im Prozesswasser. Das Prozesswasser einer typischen Karbonisierungsreaktion ist dunkel gefärbt und weißt je nach Prozessführung und Einsatzstoff(en) einen Gesamtgehalt an organischem Kohlenstoff (total organic carbon, TOC) zwischen 10.000 und 20.000 mg/l, einen chemischen Sauerstoffbedarf (CSB) zwischen 10.000 und 50.000 mg/l, einen Phenolindex zwischen 5 und 100 mg/l sowie einen pH-Wert zwischen 3 und 5 auf.

Demgegenüber liegen die oberen Grenzwerte für die indirekte Einleitung von Prozesswasser je nach Kläranlage und gültigem lokalen Wasserwirtschaftsgesetz bzgl. CSB bei 1.000 - 1.500 mg/l und bzgl. des Phenolindex zwischen 10 und 20 mg/l. Die entsprechenden Grenzwerte für die Direkteinleitung liegen noch erheblich darunter. Bisher steht die limitierte biologische Abbaubarkeit des Prozeßwassers einer breiten großindustriellen Anwendung der hydrothermalen Karbonisierung zur energetischen Nutzbarmachung von Einsatzstoffen im Wege. Aus diesem Grund ist eine Minimierung des Prozesswasseraustrags und eine Aufbereitung des ausgetragenen Prozesswassers aus einer Anlage zur hydrothermalen Karbonisierung wünschenswert und sollte sinnvollerweise insbesondere als Teilprozeß der hydrothermalen Karbonisierung von Biomasse erfolgen.

Aufgabe der Erfindung ist es daher, eine Kombination einer hydrothermalen Karbonisierung mit einer Prozesswasseraufbereitung, insbesondere einer thermo-chemischen Prozesswasseraufbereitung, in Gegenwart von Sauerstoff durch Nassoxidation anzugeben. Erfindungsgemäß wird dadurch eine Steigerung der Ausbeute an mechanisch abtrennbaren Feststoffprodukt sowie eine signifikante Verbesserung der biologischen Abbaubarkeit des Prozesswassers erzielt, die sich positiv auf eine ggf. nachgerschaltete biologische Behandlung vorzugsweise als weiterer Bestandteil des Prozesses oder nach Indirekteinleitung in zum Beispiel ein kommunales Klärwerk auswirkt. Die erfindungsgemäße Kombination wirkt sich zudem positiv auf die Stoff- und/oder die Energiebilanz des Gesamtprozesses aus.

Für sehr stark belastete Abwässer/Prozesswässer ist eine thermo-chemische Vorbehandlung durch z.B. eine unter- oder überkritische Nassoxidation ggf. unter Zugabe von Katalysatoren bekannt.

Grundsätzlicher Vorteil einer thermo-chemischen Vorbehandlung ist, dass zunächst eine Oxygenierung von biologisch schwer abbaubaren organischen Verbindungen in biologisch leichter abbaubare Verbindungen erfolgt. Die Produkte der Naßoxidation sind organische Säuren und überwiegend hochoxygenierte Verbindungen, die den biologischen Abbauprozessen in üblichen anaeroben und aeroben Abwasserbehandlungsanwendungen, wie sie einzeln oder in Kombination insbesondere für den Abbau des CSB in Prozesswässern angewendet werden, gut zugänglich.

Nachteil einer thermo-chemischen Vorbehandlung sind die üblicherweise rigiden Prozessbedingungen, die je nach Ausführung, bei einer Temperatur zwischen 140°C und 350°C und einem Druck oberhalb des Sattdampfdrucks des zu behandelnden Prozesswassers bei Oxidierungstemperatur liegen.

Der Einsatz einer thermo-chemischen Vorbehandlung bedingt somit die Förderung des zu behandelnden Prozesswassers mittels einer Pumpe in den genannten Druckbereich, die Erwärmung auf Reaktionsbedingungen, sowie die anschließenden Rückkühlung und die anschließende Entspannung auf Atmosphärendruck. Zusätzlich sind weitere Stoffströme in den Prozess einzubringen. Dies können entweder gasförmige Oxidationsmittel, wie z.B: Sauerstoff (Reinstoff oder als Gemisch in Luft) sein oder chemische Sauerstoffdonatoren, wie beispielsweise Wasserstoffperoxid (H₂O₂). Weiterhin werden ggf. Katalysatoren z.B. Fe³⁺/Fe²⁺-Salze beigemischt und/oder der pH Wert muß eingestellt werden, um das Reaktionsgemisch im sauren Milieu zu halten. Neben dem behandelten Prozesswasserstrom sind somit ebenfalls die während der Behandlung entstehenden Permanentgase und ggf. ein Feststoffprodukt aus dem Prozess abzuführen.

In Laborversuchen wurde nun im Rahmen der vorliegenden Erfindung gefunden, dass das Prozesswasser einer hydrothermalen Karbonisierung bei einer Reaktionsdauer von etwa 48h leicht dunkel gefärbt aber klar ist und einen deutlich niedrigeren CSB und TOC aufweist, als die Prozesswässer, welche nach einer erheblich kürzeren Reaktionsdauer gewonnen wurden. Prozesswässer die aus kurzen Experimenten (0,5h ≤ t ≤ 12h, bevorzugt 1 h ≤t ≤ 5h) gewonnen wurden, zeigen bei sonst identischer Behandlung/Filtration im Vergleich zu aus langen Experimenten (12h < t ≤ 48h, bevorzugt 24h ≤ t ≤48h) erhaltenen Prozesswässern eine deutliche Trübung von sehr dunkler Farbe, was auf einen Anteil an flüssigen und/oder festen Schwebstoffen schließen lässt, welche durch Filtration nicht abgetrennt werden konnten. Gleichzeitig wurden bei kurzen Experimenten hohe CSB von über 30.000 mg/l. insbesondere ca. 30.000 - ca. 50.000 mg/l gemessen, bei langen Experimenten lagen diese üblicherweise bei 20.000 mg/l oder darunter, insbesondere ca. 10.000 - ca. 20.000 mg/l.

Insbesondere, wenn die Rückkühlung der Karbonisierungsprodukte aus kurzen Karbonisierungsexperimenten auf unter 140°C schnell erfolgt (t ≤ 1 h, bevorzugt ≤ 0,5h besonders bevorzugt ≤ 0,25h), ist diese Trübung besonders stark ausgeprägt und es wurden regelmäßig hohe CSB Werte von bis zu ca. 50.000 mg/l gemessen. Es scheint somit, dass durch eine lange Verweilzeit (12h < t ≤ 48h, bevorzugt 24h ≤ t <≤ 48h) bei Temperaturen größer 140°C (bevorzugt 180°C ≤ T ≤ 250°C, besonders bevorzugt 190°C ≤ T ≤ 230°C) im Reaktor ein Großteil der Schwebestoffe in abfiltrierbares Feststoffprodukt umgewandelt werden und gleichzeitig ein Großteil der im Wasser gelösten reaktiven organischen Stoffe umgewandelt wird (vermutlich zu Feststoffen rekombiniert bzw. kondensiert), wohingegen, bei kurzen Karbonisierungsexperimenten (0,5h ≤ t ≤ 12h, bevorzugt 1h ≤ t ≤ 5h) insbesondere, wenn diese schnell abgekühlt werden (t ≤ 1 h, bevorzugt ≤ 0,5h besonders bevorzugt ≤ 0,25h), noch erhebliche Mengen an nicht abfiltrierbaren Schwebstoffen und gelöster Organik im Prozesswasser vorhanden sind.

Weiterhin wurde gefunden, dass das durch Filtration nach einer langen hydrothermalen Karbonisierung (12h < t ≤ 48h, bevorzugt 24h ≤ t ≤ 48h) abgetrennte Prozesswasser, welches bei Umgebungsbedingungen (T= 15°C und p=1 bar) aufbewahrt wurde, nach mehreren Stunden erheblich nachgedunkelt war. Wurde das Wasser anschließend noch einmal filtriert, so konnte wiederum ein Feststoffprodukt abgetrennt werden. Das Nachdunkeln des Prozesswassers und die Bildung von Feststoffprodukt konnte durch die Herstellung einer Inertgas-Atmosphäre aus Argon in dem Aufbewahrungsbehälter und die Aufbewahrung in Dunkelheit teilweise unterdrückt werden. Weiterhin wurde gefunden, dass aus einem durch Filtration nach einer kurzen hydrothermalen Karbonisierung (0,5h ≤ t ≤ 12h, bevorzugt 1 h ≤ t ≤ 5h) gewonnenen Prozesswasser, welches bei Umgebungsbedingungen (T=15°C und p=1 bar) aufbewahrt wurde, nach mehreren Stunden durch erneute Filtration wieder Feststoffprodukt gewonnen werden konnte. Auch hier konnte die Bildung von Feststoffprodukt durch die Herstellung einer Inertgas-Atmosphäre aus Argon in dem Aufbewahrungsbehälter und die Aufbewahrung in Dunkelheit teilweise unterdrückt werden. Es ist wird somit davon ausgegangen, dass die Vermischung des Prozesswassers mit Sauerstoff schon bei Umgebungsbedingungen eine schnellere Umsetzung der Schwebestoffe und der gelösten Organik zu einem abfiltriebaren Feststoffprodukt unterstützt. Eine thermo-chemische Aufbereitung des Prozesswassers einer hydrothermalen Karbonisierung durch eine Nassoxidation, ist daher vorteilhaft sowohl im Hinblick auf die Steigerung der Ausbeute an abfiltrierbarem Feststoffprodukt als auch im Hinblick auf eine Verbesserung der biologischen Abbaubarkeit des so behandelten Prozesswassers.

Gegenstand der vorliegenden Erfindung ist daher ein Verfahren zur hydrothermalen Karbonisierung, wobei das Prozesswasser insbesondere nach einer Verweilzeit von maximal ca. 12 Stunden im Karbonisierungsreaktor einer thermo-chemischen Aufbereitung, insbesondere einer Nassoxidation, ggf. in Gegenwart eines Katalysators zugeführt wird. Als Katalysatoren kommen üblicherweise für Nassoxidationen einsetzbare Katalysatoren, wie z.B. Fe³⁺/Fe²⁺-Salze in Betracht.

Gemäß einer bevorzugten Ausführungsform beträgt die Verweilzeit der Reakktionspartner der hydrothermalen Karbonisierung im Karbonisierungsreaktor maximal 12 Stunden. Insbesondere bevorzugt beträgt die Abkühlzeit des Prozesswassers nach Entnahme aus dem Karbonisierungsreaktor und vor Zufuhr zur thermo-chemischen Aufbereitung durch Nassoxidation maximal ca. 1 Stunde, vorzugsweise maximal ca. 0,5h besonders vorzuziehen maximal ca. 0,25h.

Vorteilhaft liegt das Druckniveau der thermo-chemischen Aufbereitung, insbesondere der Nassoxidation, zwischen dem Druckniveau der hydrothermalen Karbonisierungsreaktion und Atmosphärendruck.

Bevorzugt wird die Nassoxidation bei einem pH im Bereich von etwa (3 - 5) durchgeführt. Eine Einstellung des pH-Werts kann auf an sich bekannte Weise, z.B. durch die Zugabe von einer geeigneten organischen oder mineralischen Säure erfolgen.

Gemäß einer weiteren bevorzugten Ausführungsform wird das Gemisches aus Feststoffprodukt und Prozesswasser nach der hydrothermalen Karbonisierung mechanisch entwässert, wobei die mechanische Entwässerung im Wesentlichen auf dem Druckniveau der hydrothermalen Karbonisierung oder im Wesentlichen auf dem Druckniveau der thermo-chemischen Aufbereitung, insbesondere durch Nassoxidation erfolgt.

Die Rückkühlung des thermo-chemisch durch Nassoxidation behandelten Prozesswassers wird vorteilhaft so ausgeführt wird, das der zu behandelnde Prozesswasserstrom zumindest teilweise vorgewärmt wird.

Die vorliegende Erfindung zeichnet sich inbesondere aus durch
- die Durchführung einer hydrothermalen Karbonisierung bei prozessbedingten Temperaturen und Drücken von mindestens ca. 5 bar, (bevorzugt ca. 10 bar ≤ p ≤ ca. 30 bar) und mindestens ca. 140°C bis maximal Siedetemperaturen (bevorzugt ca. 180°C ≤ T ≤ ca. 250°C, besonders bevorzugt ca. 190°C ≤ T ≤ ca. 230°C), solange, bis die erforderliche Produktqualität durch Anhebung des Kohlenstoffanteils des Einsatzstoffes um mindestens ca. 2%, bevorzugt um ca.2 % bis ca. 70%, erreicht ist, vorzugsweise durch eine Reaktionszeit von maximal ca. 12 Stunden (0,5h ≤ t ≤ 12h, bevorzugt 1h ≤ t ≤ 5h),
- einer Rückkühlung und Entspannung des Feststoffproduktes nach Abschluss der hydrothermalen Karbonisierung
   ○ in einer bevorzugten Ausführungsform gemeinsam mit dem Prozesswasser auf Temperaturen kleiner 100°C (bevorzugt ca. 95°C ≥ T ≥ ca. 30°C) und auf im Wesentlichen Atmosphärendruck bevorzugt in weniger als einer Stunde, weiter bevorzugt in weniger als 0,5 Stunden, besonders bevorzugt in weniger als 0,25 Stunden mit einer nachgelagerten, weitgehendend mechanischen Entwässerung des Feststoffproduktes, bevorzugt durch eine Kolbenpresse, eine Zentrifuge oder eine Bandpresse oder
   ○ in einer anderen bevorzugten Ausführungsform nach einer weitgehenden mechanischen Entwässerung des Feststoffproduktes, bevorzugt durch eine Kolbenpresse, eine Zentrifuge oder eine Bandpresse ohne das Prozesswasser auf Temperaturen kleiner 100°C (bevorzugt ca. 95°C ≥ T ≥ ca. 30°C) und auf im Wesentlichen Atmosphärendruck bevorzugt in weniger als einer Stunde, weiter bevorzugt in weniger als 0,5 Stunden, besonders bevorzugt in weniger als 0,25 Stunden,
- erforderlichenfalls die Einstellung des Druck- und Temperaurniveaus des nach der hydrothermalen Karbonisierung vom Feststoffprodukt mechanisch abgetrennten und aus dem Prozess abzuführenden Anteils des Prozesswassers
   ○ in dem Fall in dem die prozessbedingten Temperaturen und Drücke der thermo-chemischen Behandlung, durch Nassoxidation oberhalb der Temperatur und dem Druck der mechanischen Entwässerung liegen durch Beaufschlagung mit Druck durch bspw. eine Pumpe und durch Einkopplung von bevorzugt prozessinterner Wärme bevorzugt durch Dampfinjektion oder durch Wärmetauscher und
   ○ in dem Fall in dem die prozessbedingten Temperaturen und Drücke unterhalb der Temperatur und des Druck der mechanischen Entwässerung liegen, durch Entspannung und Temperaturabsenkung bevorzugt durch Flashverdampfung oder Wärmetauscher mit anschließender Entspannung vorzugsweise in einer Schleuse oder an einer Blende,
- die Abtrennung und Nutzung des nach der hydrothermalen Karbonisierung nicht aus dem Prozess abzuführenden Anteils des Prozesswasser vorzugsweise zur Schließung der Wasserbilanz der hydrothermalen Karbonisierung durch Rückführung desselben in die hydrothermale Karbonisierung,
- die thermo-chemischen Aufbereitung des nach der hydrothermalen Karbonisierung vom Feststoffprodukt mechanisch abgetrennten und aus dem Prozess abzuführenden Anteils des Prozesswassers durch Nassoxidation bei prozessbedingten Temperaturen und Drücken von mindestens ca. 2 bar (bevorzugt ca. 3 bar ≤ p ≤ ca. 20 bar) und maximal Siedetemperatur (bevorzugt ca. 120°C ≤ T ≤ ca. 200 °C) durch das Einbringen von Sauerstoff, vorzugsweise in Reinform bei Prozessbedingungen die im Wesentlichen denen der hydrothermalen Karbonisierung entsprechen oder darunter liegen oder vorzugsweise als Anteil der Umgebungsluft bei Prozessbedingungen die oberhalb derer der hydrothermalen Karbonisierung liegen oder vorzugsweise unabhängig von den Prozessbedingungen chemisch gebunden, z.B. als H₂O₂, sowie erforderlichenfalls der Einsatz von Heterogenkatalyse (Fe²⁺),
- die Abfuhr der während der thermo-chemischen Aufbereitung durch Nassoxidation anfallenden Wärme sowie der nach Abschluss der thermo-chemischen Aufbereitung vorhandenen fühlbaren Wärme des behandelten Prozesswassers durch die Verdampfung von Wasser in einem Wärmetauscher, so dass das behandelte Prozesswasser auf vorzugsweise kleiner 100°C (bevorzugt ca. 95°C ≥ T ≥ ca. 30°C) gekühlt wird,
- die Abfuhr der während der thermo-chemischen Aufbereitung durch Nassoxidation anfallenden Permanentgase wie zum Beispiel CO₂, CO sowie ggf. das in den Prozess zusammen mit Sauerstoff eingebrachte zusätzliche Gas sowie der nicht umgesetzte Sauerstoff erst nach der Rückkühlung des aufbereiteten Prozesswassers auf kleiner 100°C (bevorzugt ca. 95°C ≥ T ≥ ca. 30°C),
- die Entspannung des aufbereiteten Prozesswassers auf etwa Atmosphärendruck,
- der Abtrennung des während der thermo-chemischen Aufbereitung anfallenden Feststoffprodukts vorzugsweise durch Filtration,
- die gemeinsame weitere Veredelung oder Nutzung des mechanisch entwässerten Feststoffproduktes sowie des nach der thermo-chemischen Aufbereitung abgetrennten Feststoffprodukts und ggf.
- die weitere Aufbereitung, Einleitung oder Verwertung des thermo-chemisch aufbereiteten Prozesswassers vorzugsweise durch eine biologische Aufbereitung.

Der wesentliche Nutzen der erfindungsgemäßen Kombination besteht darin, dass die biologisch nur schwer abbaubaren Verbindungen im unbehandelten Prozesswassers (zum Beispiel Lignin und -degradationsprodukte, Huminsäuren, Phenole, etc.) durch die thermo-chemische Aufbereitung durch Nassoxidation in biologisch leichter abbaubare Verbindungen überführt werden. Weiterhin werden die nicht durch mechanische Entwässerung abtrennbaren Schwebstoffe in ein abfiltrierbares Feststoffprodukt gewandelt. Nach der Naßoxidation von Prozeßwässern der hydrothermalen Karbonisierung der Einsatzstoffe liegt also überwiegend CSB-reiches Wasser mit sehr guter bis ausgezeichneter biologischer Abbaubarkeit vor. Es entsteht also eine sehr leicht verfügbare Kohlenstoffquelle und somit ein Substrat weitgehend ohne störende Beladung mit stickstoff- oder phosphororganischen Verbindungen, die in der biologischen Aufbereitung zwangsläufig einen nachgelagerten verfahrenstechnischen Aufwand bedingen würden. Vorzugsweise kann das Prozesswasser anschließend weiter biologisch anaerob oder aerob aufbereitet werden, bevor es indirekt oder direkt als Abwasser eingeleitet wird. Durch eine gesteigerte Abbaubarkeit kann gleichzeitig die Methanausbeute der potentiell nachgeschalteten anaeroben Aufbereitung erheblich gesteigert werden. Als weiterhin vorteilhaft an dieser Ausführungsform erweist sich, dass die Prozessbedingungen der thermo-chemischen Aufbereitung unabhängig von den Prozessbedingungen der Karbonisierungsreaktion gewählt werden können, dass die thermo-chemische Prozesswasseraufbereitung bei im Wesentlichen Siedebedingungen betrieben werden kann, ohne dass mit den abgeführten Permanentgasen ein erheblicher Verlust an Wasserdampf entsteht, wodurch sich die Umsetzung der thermo-chemischen Aufbereitung maximieren und ggf. die Kompressorleistung zur Bereitstellung von Luft bei prozessbedingten Drücken und damit die elektrische Leistung minimieren lässt.

Eine weitere bevorzugte erfindungsgemäße Lösung für eine verfahrenstechnisch einfache und kostengünstige Kombination einer hydrothermalen Karbonisierung mit einer thermo-chemischen Aufbereitung des Prozesswassers, durch Nassoxidation ist gekennzeichnet durch
- die Durchführung einer hydrothermalen Karbonisierung bei prozessbedingten Temperaturen und Drücken von mindestens ca. 5 bar, (bevorzugt ca. 10 bar ≤ p ≤ ca. 30 bar) und mindestens ca. 140°C bis maximal Siedetemperaturen (bevorzugt ca. 180°C ≤ T ≤ ca. 250°C, besonders bevorzugt ca. 190°C ≤ T ≤ ca. 230°C), solange, bis die erforderliche Produktqualität durch Anhebung des Kohlenstoffanteils des Einsatzstoffes um mindestens ca. 2%, bevorzugt um ca. 2% bis ca. 70% erreicht ist, vorzugsweise durch eine Reaktionszeit von maximal ca. 12 Stunden (0,5h ≤ t ≤ 12h, bevorzugt 1h ≤ t ≤ 5h),
- die weitgehende mechanische Entwässerung des Feststoffprodukts vorzugsweise durch eine Kolbenpresse, ein Zentrifuge oder eine Bandpresse, unmittelbar nach der hydrothermalen Karbonisierung bei einem Druck von maximal dem Betriebsdruck der hydrothermalen Karbonisierung und mindestens dem Betriebsdruck der thermo-chemischen Aufbereitung durch Nassoxidation, wobei der Betriebsdruck der thermo-chemischen Aufbereitung durch Nassoxidation unterhalb des Betriebsdrucks der hydrothermalen Karbonisierung liegt oder diesem entspricht,
- erforderlichenfalls die Temperatur- und Druckabsenkung des Feststoffprodukts gemeinsam mit dem Prozesswasser auf den Druck der mechanischen Entwässerung durch die Produktion von Dampf durch vorzugsweise Flashverdampfung in vorzugsweise weniger als einer Stunde, weiterhin bevorzugt in weniger als 0,5 Stunden, besonders bevorzugt in weniger als 0,25 Stunden,
- die weitere Temperaturabsenkung und Entspannung des mechanisch entwässerten Feststoffprodukts auf Temperaturen kleiner 100°C (bevorzugt ca. 95°C ≥ T ≥ ca. 30°C) und auf im Wesentlichen Atmosphärendruck, vorzugsweise durch Flashverdampfung,
- die Abtrennung und Nutzung des nach der hydrothermalen Karbonisierung nicht aus dem Prozess abzuführenden Anteils des Prozesswasser vorzugsweise zur Schließung der Wasserbilanz der hydrothermalen Karbonisierung durch Rückführung desselben in die hydrothermale Karbonisierung,
- erforderlichenfalls die Temperatur- und Druckabsenkung des vom Feststoffprodukt mechanisch abgetrennten und aus dem Prozess abzuführenden Anteils des Prozesswassers auf das Druck- und Temperaturniveau der thermo-chemischen Aufbereitung durch Nassoxidation, bevorzugt durch Flashverdampfung,
- die thermo-chemischen Aufbereitung des vom Feststoffprodukt abgetrennten und aus dem Prozess abzuführenden Anteils des Prozesswassers durch Nassoxidation bei prozessbedingten Temperaturen und Drücken von mindestens ca. 2 bar (bevorzugt ca. 3 bar ≤ p ≤ ca. 20 bar) und maximal Siedetemperatur (bevorzugt ca. 120°C ≤ T ≤ ca. 200°C) und maximal dem Druck der hydrothermalen Karbonisierung von mindestens ca. 5 bar (bevorzugt ca. 10 bar ≤ p ≤ ca. 30 bar) durch die Einbringung von Sauerstoff, vorzugsweise in Reinform oder vorzugsweise chemisch gebunden, z.B. als H₂O₂, sowie erforderlichenfalls der Einsatz von Heterogenkatalyse (Fe²⁺),
- die Abfuhr der während der thermo-chemischen Aufbereitung durch Nassoxidation anfallenden Wärme sowie der nach Abschluss der thermo-chemischen Aufbereitung vorhandenen fühlbaren Wärme des behandelten Prozesswassers durch die Verdampfung von Wasser in einem Wärmetauscher, so dass das behandelte Prozesswasser auf vorzugsweise unter 100°C (bevorzugt ca. 95°C ≥ T ≥ ca. 30°C) gekühlt wird,
- die Abfuhr der während der thermo-chemischen Aufbereitung durch Nassoxidation anfallenden Permanentgase wie zum Beispiel CO₂, CO sowie ggf. das in den Prozess zusammen mit Sauerstoff eingebrachte zusätzliche Gas sowie der nicht umgesetzte Sauerstoff erst nach der Rückkühlung des aufbereiteten Prozesswassers auf kleiner 100°C (bevorzugt ca. 95°C ≥ T ≥ ca. 30°C),
- die Entspannung des aufbereiteten Prozesswassers auf Atmosphärendruck,
- der Abtrennung des während der thermo-chemischen Aufbereitung anfallenden Feststoffprodukts vorzugsweise durch Filtration,
- die gemeinsame weitere Veredelung oder Nutzung des mechanisch entwässerten Feststoffproduktes sowie des nach der thermo-chemischen Aufbereitung abgetrennten Feststoffprodukts und ggf.
die weitere Aufbereitung, Einleitung oder Verwertung des thermo-chemisch aufbereiteten Prozesswassers.

Wesentliches Wirkprinzip der Erfindung ist eine optimierte Energiebilanz bei gleichzeitiger einfacher verfahrenstechnischer Ausführung der Kombination einer hydrothermalen Karbonisierung mit einer thermo-chemischen Prozesswasseraufbereitung, durch Nassoxidation, die dadurch erreicht wird, dass das Feststoffprodukt-Prozesswassergemisch nicht erst auf Atmosphärenbedingungen entspannt und dann mechanisch entwässert wird, sondern dass die mechanische Entwässerung unter Druck, d.h. bei maximal dem Betriebsdruck der Karbonisierung und mindestens dem Betriebsdruck der thermo-chemischen Wasseraufbereitung durch Nassoxidation erfolgt, so dass auf eine separate Druck- und Temperaturerhöhung des aufzubereitenden Prozesswassers verzichtet werden kann. Weiterhin wird erreicht, dass sowohl die bei der thermo-chemischen Aufbereitung durch Nassoxidation frei werdende Reaktionswärme als auch die fühlbare Wärme des Prozesswassers durch die Herstellung von Dampf in einem Wärmetauscher wieder für den Prozess nutzbar gemacht werden kann. Vorteilhaft kann der erzeugte Dampf zur Vorwärmung des Einsatzstoffes oder zur Trocknung des Feststoffproduktes eingesetzt werden.

In einer bevorzugten Ausführungsform erfolgt die mechanische Entwässerung im Wesentlichen auf dem Betriebsdruck der hydrothermalen Karbonisierung. Wesentlicher Vorteil dieser Variante ist die Gewinnung eines Prozesswasserstroms bei hoher Temperatur und hohem Druck, der erforderlichenfalls vorteilhaft zur Schließung der Wasserbilanz wieder in den Karbonisierungsprozess eingebracht werden kann.

In einer anderen, bevorzugten Ausführungsform erfolgt die mechanische Entwässerung im Wesentlichen auf dem Betriebsdruck der thermo-chemischen Prozesswasseraufbereitung durch Nassoxidation. Wesentlicher Vorteil dieser Variante ist die Vereinfachung der Betriebsbedingungen der mechanischen Entwässerung und die damit einhergehende Reduktion der Anforderungen an die eingesetzten Materialien wie Dichtungen und ein reduzierter Verschleiß.

Die Erfindung soll anhand des folgenden Beispiels erläutert werden, ohne jedoch auf die speziell beschriebenen Ausführungsformen beschränkt zu sein.

Ausführungsbeispiel

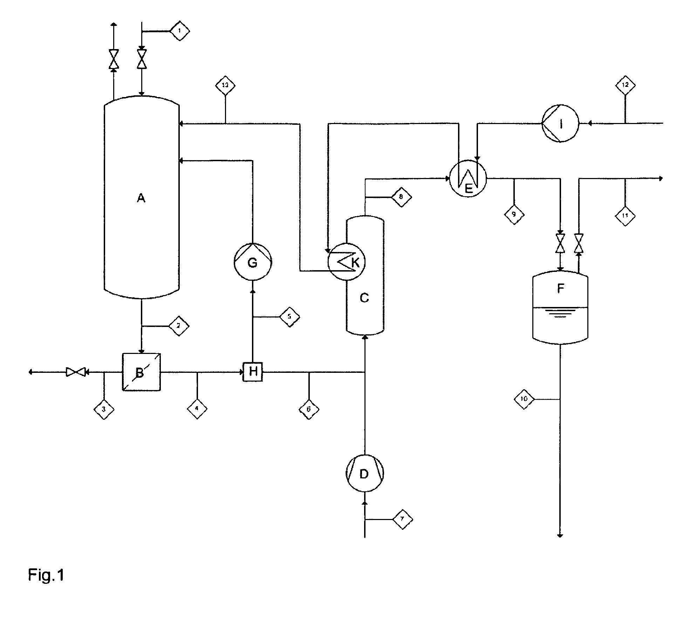

Fig. 1 zeigt ein Ausführungsbeispiel für die Integration einer thermo-chemischen Prozesswasseraufbereitung in eine Anlage zur hydrothermalen Karbonisierung. Der Einsatzstoff (1) wird mit Druck von mindestens ca. 5 bar vorzugsweise mindestens ca. 20 bar beaufschlagt und in einen Karbonisierungsreaktor (A) eingebracht und dort bei prozessbedingten Drücken und Temperaturen von mindestens ca. 5 bar vorzugsweise mindestens ca. 20 bar mindestens ca. 180°C und maximal Siedetemperatur hydrothermal behandelt. Das fertige Gemisch aus Prozesswasser und Feststoffprodukt (2) wird aus dem Karbonisierungsreaktor ausgetragen und über eine Trennvorrichtung (B) vorzugsweise einer Kolbenpresse, einem Hydrozyklon, einer Zentrifuge oder einer Bandpresse in einen feststoffreichen Strom (3) und einen Prozesswasserstrom (4) zerlegt. Ein Teil des Prozesswassers (5) wird in vorzugsweise einem Splitter (H) abgetrennt und über eine Pumpe (G) wieder in den Karbonisierungsreaktor zurückgeführt.

Das aufzubereitende Prozesswasser (6) wird vorteilhaft von unten in einen Prozesswasserreaktor (C) eingebracht, der leicht unterhalb des Druckniveaus der hydrothermalen Karbonisierung arbeitet, und dort mit einem Gasstrom (7), bestehend aus reinem Sauerstoff oder Luftsauerstoff (7) vermischt, der durch einen Kompressor (D) gefördert wird. Alternativ kann die Bereitstellung des Sauerstoffs auch in einem Tank erfolgen, in dem der Sauerstoff bei einem Druck oberhalb des Betriebsdrucks des Prozesswasserreaktors gelagert wird. Die während der Oxidation entstehende Wärme wird über einen Wärmetauscher aus dem Prozesswasserreaktor abgeführt. Das aufbereitete Prozesswasser, die während der Oxidation erzeugten Permanentgase und das nicht umgesetzte Gas verlassen vorteilhaft oben zusammen mit dem behandelten Prozesswasser (8) den Prozesswasserreaktor und werden in einem zweiten Wärmetauscher (E) zurückgekühlt, bevor sie in einen Entgasungsbehälter (F) eingebracht werden (9). Aus dem Entgasungsbehälter werden vorteilhaft oben die Permanentgase (11) und vorteilhaft unten das aufbereitete Prozesswasser (10) abgeführt, welches im Wesentlichen auf Atmosphärendruck entspannt wird. Das im Prozesswasserreaktor gebildete Feststoffprodukt wird in einem Filter (L) vom Prozesswasser abgetrennt (14) und kann zusammen mit dem anderen Feststoffproduktstrom (3) einer weiteren Veredelung oder Nutzung zugeführt werden. Das aufbereitete Prozesswasser (15) wird kann als Abwasser eingeleitet werden oder vorzugsweise einer biologischen Aufbereitung zugeführt werden.

In den Wärmetauschern (E und K) wird Wasser (12) verdampft, welches zuerst mit einer Pumpe gefördert und dann als Heizdampf (13) zur Verfügung steht.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

## Patentansprüche

1. Verfahren zur hydrothermalen Karbonisierung, wobei das Prozesswasser insbesondere nach einer Verweilzeit von maximal 12 Stunden im Karbonisierungsreaktor einer thermo-chemischen Aufbereitung, insbesondere einer Nassoxidation, ggf. in Gegenwart eines Katalysators zugeführt wird.

2. Verfahren nach Anspruch 1 **dadurch gekennzeichnet, dass** das Druckniveau der thermo-chemischen Aufbereitung durch Nassoxidation zwischen dem Druckniveau der hydrothermalen Karbonisierung und dem Atmosphärendruck liegt.

3. Verfahren nach einem oder mehreren der vorherigen Ansprüche **dadurch gekennzeichnet, dass** eine mechanische Entwässerung des Gemisches aus Feststoffprodukt und Prozesswasser nach einer hydrothermalen Karbonisierung im Wesentlichen auf dem Druckniveau der hydrothermalen Karbonisierung erfolgt.

4. Verfahren nach einem oder mehreren der vorherigen Ansprüche **dadurch gekennzeichnet, dass** eine mechanische Entwässerung des Gemisches aus Feststoffprodukt und Prozesswasser nach einer hydrothermalen Karbonisierung im Wesentlichen auf dem Druckniveau der thermo-chemischen Aufbereitung durch Nassoxidation erfolgt.
